# EUROPÄISCHE PATENTSCHRIFT

(11) **EP 0 332 950 B1**
(45) Veröffentlichungstag und Bekanntmachung des Hinweises auf die Patenterteilung: **19.05.1993**
(21) Anmeldenummer: 89103737.6
(22) Anmeldetag: 03.03.1989
(51) Int. Cl.: G21C 9/00

(54) **Anordnung für die Druckentlastung des Sicherheitsbehälters einer Kernkraftanlage**
Arrangement for depressurizing the containment of a nuclear power plant
Disposition pour la dépressurisation de l'enceinte de confinement d'une centrale nucléaire

(30) Priorität: 03.03.1988 DE 3806872
(43) Veröffentlichungstag der Anmeldung: 20.09.1989
(73) Patentinhaber: RWE Energie Aktiengesellschaft, 45128 Essen (DE)
(72) Erfinder: Berg, Diethart, Dipl.-Ing., D-4352 Herten-Westerholt (DE); Reedehase, Claus-Gert, Dipl.-Ing., D-4173 Kerken-Nieukerk (DE); Wolf, Manfred, Dipl.-Ing., D-4300 Essen 1 (DE)
(74) Vertreter: Andrejewski, Walter

(56) Entgegenhaltungen:
- EP-A- 0 290 028
- FR-A- 2 360 158
- GB-A- 2 169 126
- NUCLEAR TECHNOLOGY, Band 72, Nr. 3, März 1986, Seiten 268-290, La Grange Park, Illinois, US; W.K.E. BRAUN et al.: "The reactor containment of standard-design german pressurized water reactors"

## Beschreibung

Die Erfindung betrifft eine Anordnung für die Druckentlastung des Sicherheitsbehälters einer Kernkraftanlage mit Druckwasserreaktor im Störungsfall, wobei der Druckluftstrom aus dem Sicherheitsbehälter gefiltert an die Atmosphäre abgegeben wird, mit einem innerhalb des Sicherheitsbehälters angeordneten Filteraggregat für die Abfilterung von in dem Druckluftstrom mitgeführten radioaktiven Substanzen. - Der Sicherheitsbehälter einer Kernkraftanlage ist bekanntlich ein nach sicherheitstechnischen Regeln ausgelegtes Bauwerk, welches den Reaktordruckbehälter und damit den Reaktorkern umgibt. Filteraggregat bezeichnet im Rahmen der Erfindung die funktionelle Vereinigung einer Vielzahl von Filterelementen, auch von solchen unterschiedlichster Zweckbestimmung. Ein Rohrleitungssystem kann im Rahmen der Erfindung aus einer Rohrleitung oder aus mehreren über Armaturen verbundenen Rohrleitungen bestehen.

Eine Anordnung der eingangs genannten Art ist aus der GB-A-2 169 126 bekannt. Die Filtereinrichtung besteht einzig aus einem Gaswäscher nach dem Waschflaschenprinzip. Der Gaswäscher wird mit Wasser betrieben. Ein mit Wasser betriebener Gaswäscher funktioniert im Rahmen der vorliegenden Problematik sehr unbefriedigend, da einerseits radioaktives Jod bzw. seine Verbindungen weder gut löslich sind noch mit (neutralem) Wasser reagieren und andererseits die im Störfall anfallenden Aerosolpartikel aus Metallen und Metalloxiden von Wasser als solchem schlecht benetzt werden. Im übrigen kann ein Gasblasenstrom im Störfall nicht ohne weiteres mit konstanten Durchflußbedingungen eingestellt werden. Zudem besteht bei einem Druckstoß, welcher im Rahmen eines Störfalles erwartet werden muß, die Gefahr, daß der Gaswäscher "durchgeblasen" wird, so daß einerseits mit Radioaktivität konataminiertes Wasser in die Umgebung gelangen könnte und andererseits der Wasserstand und somit die vom Gasblasenstrom zu durchlaufende Strecke verringert werden könnte.

Eine andere Anordnung ist aus Empfehlungen der Reaktorsicherheitskommission bekannt. Hierbei ist das Filteraggregat mit all seinen Filterelementen außerhalb des Sicherheitsbehälters angeordnet. Das macht besondere, aufwendige Bauwerke oder die Bereitstellung entsprechender Bauwerke für das Filteraggregat erforderlich, zumal die Filterelemente im Einsatzfall radioaktive Substanzen aufnehmen und entsprechend abgeschirmt werden müssen. Darüber hinaus bestehen in funktioneller Hinsicht Probleme: Die Filterelemente befinden sich, wenn nicht weitere Maßnahmen in dem Bauwerk, in dem das Filteraggregat angeordnet ist, verwirklicht werden, in einer Umgebung mit gegenüber der Temperatur im Sicherheitsbehälter beachtlich reduzierter Temperatur. Es fällt daher in den Filterelementen in störender Menge Kondensat an, welches radioaktiv kontaminiert ist. Die Kondensatmenge beeinträchtigt die Wirksamkeit der Filterelemente.

Beide bekannten Anordnungen gehören zu den anlageninternen Maßnahmen des Störungsfallschutzes und dienen der Reduzierung des Restrisikos, insbes. bei einem Kernschmelzunfall.

Der Erfindung liegt die Aufgabe zugrunde, eine funktionelle Verbesserung, insbes. des Jod-Retentionsvermögens und der Betriebssicherheit zu erreichen.

Zur Lösung dieser Aufgabe lehrt die Erfindung eine Anordnung für die Druckentlastung des Sicherheitsbehälters einer Kernkraftanlage mit Druckwasserreaktor oder Siedewasserreaktor im Störungsfall, wobei der Druckluftstrom aus dem Sicherheitsbehälter gefiltert an die Atmosphäre abgegeben wird, mit einem Filteraggregat für die Abfilterung von in dem Druckluftstrom mitgeführten radioaktiven Substanzen, wobei das Filteraggregat ein innerhalb des Sicherheitsbehälters angeordnetes Aerosolfilter-Teilaggregat sowie ein innerhalb des Sicherheitsbehälters angeordnetes Molekularsieb-Teilaggregat für die Jodfilterung aufweist und wobei das Molekularsieb-Teilaggregat über ein Rohrleitungssystem mit Druckreduzierblende und steuerbaren Armaturen an das Rohrleitungssystem für die Abführung des Druckluftstromes angeschlossen ist.

Eine unabhängige und selbständige Lösung dieser Aufgabe lehrt eine Anordnung, wobei das Molekularsieb-Teilaggregat für die Jodfilterung nicht innerhalb des Sicherheitsbehälters angeordnet ist, sondern außerhalb des Sicherheitsbehälters, wobei anstelle einer Druckreduzierblende ein Reduzierventil eingerichtet ist, und wobei das Molekularsieb-Teilaggregat über ein Rohrleitungssystem mit Reduzierventil und steuerbaren Armaturen außerhalb des Sicherheitsbehälters an das Rohrleitungssystem für die Abführung des Druckluftstromes angeschlossen ist. Ansonsten sind die Merkmale der erstgenannten Lösung der Aufgabe verwirklicht. Vorteilhafterweise ist bei den erfindungsgemäßen Anordnungen das Molekularsieb-Teilaggregat in einem ohnehin erforderlichen Bauwerk für Hilfsanlagen angeordnet.

Die erreichten Vorteile bestehen einerseits in der baulichen Vereinfachung und andererseits in beachtlichen funktionellen Verbesserungen. Die bauliche Vereinfachung resultiert aus der Tatsache, daß bei einer erfindungsgemäßen Anordnung der ohnehin vorhandene Sicherheitsbehälter eine zusätzliche Funktion erfüllt, nämlich für die Aufnahme der Filteraggregate zusätzlich eingesetzt wird, wozu bauliche Veränderungen nicht erforderlich sind, woraus aber auch funktionelle Verbesserungen resultieren. Im Vergleich mit den eingangs beschriebenen bekannten Anordnungen erreicht die Erfindung zunächst Vorteile in bezug auf die Aerosolfilterung: Die in den Aerosol-Filterelementen zurückgehaltenen radioaktiven Aerosole verbleiben in Sicherheitsbehälter. Das außerhalb des Sicherheitsbehälters noch anfallende Kondensat enthält folglich weniger radioaktive Spaltprodukte. Eine Abschirmung der Filterelemente bzw. des Filteraggregates im Sicherheitsbehälter ist nicht erforderlich, weil insoweit der Sicherheitsbehälter auch die Abschirmfunktion erfüllt. Infolge der im Sicherheitsbehälter höheren Betriebstemperatur fällt in den Filterelementen weniger Kondensat als bei der bekannten Ausführungsform an. Daher wird die Wirksamkeit der Aerosol-Filterelemente, auch bei Intervallbetrieb, durch Kondensatbildung nicht beeinträchtigt. Infolge der im Sicherheitsbehälter höheren Dichte und somit des geringeren spezifischen Volumens des Filtermediums ergibt sich ein geringeres Bauvolumen. Vorteile ergeben sich aber auch in bezug auf das Molekularsieb-Teilaggregat für die Jodfilterung. Bei der beschriebenen Schaltung werden insoweit keine Fremdmedien benötigt. Besonderer Aufwand für die Regelung ist nicht erforderlich. Es handelt sich bei dem erfindungsgemäß angeordneten und geschalteten Molekularsieb-Teilaggregat um ein passives und damit gegen Störungen wenig anfälliges System. Es versteht sich, daß man alle Komponenten auf etwa gleichem Druck halten wird, wie die Umgebung am Aufstellungsort, so daß keine besonderen Anforderungen an die Festigkeit erfüllt werden müssen.

Im folgenden wird die Erfindung anhand einer lediglich ein Ausführungsbeispiel darstellenden Zeichnung erläutert. Es zeigen in schematischer Darstellung
- Fig. 1: den Gegenstand der Erfindung mit Aerosolfilter-Teilaggregat und Molekularsieb-Teilaggregat und
- Fig. 2: eine andere Ausführungsform des Gegenstandes der Fig. 1.

Die in den Figuren dargestellte Anordnung dient für die Druckentlastung des Sicherheitsbehälters 1 einer Kernkraftanlage mit Druckwasserreaktor oder Siedewasserreaktor im Störfall. Bei einer solchen Druckentlastung wird der Druckluftstrom aus dem Sicherheitsbehälter 1 gefiltert an die Atmosphäre abgegeben, in den Ausführungsbeispielen bei 2. Zu der Anordnung gehören Filteraggregate 3 bzw. 4 für die Abfilterung von in dem Druckluftstrom mitgeführten radioaktiven Substanzen sowie ein die Filterelemente 3a bzw. 4a des Filteraggregates bzw. der Filteraggregate 3, verbindendes Rohrleitungssystem 5, 6 und Armaturen 7.

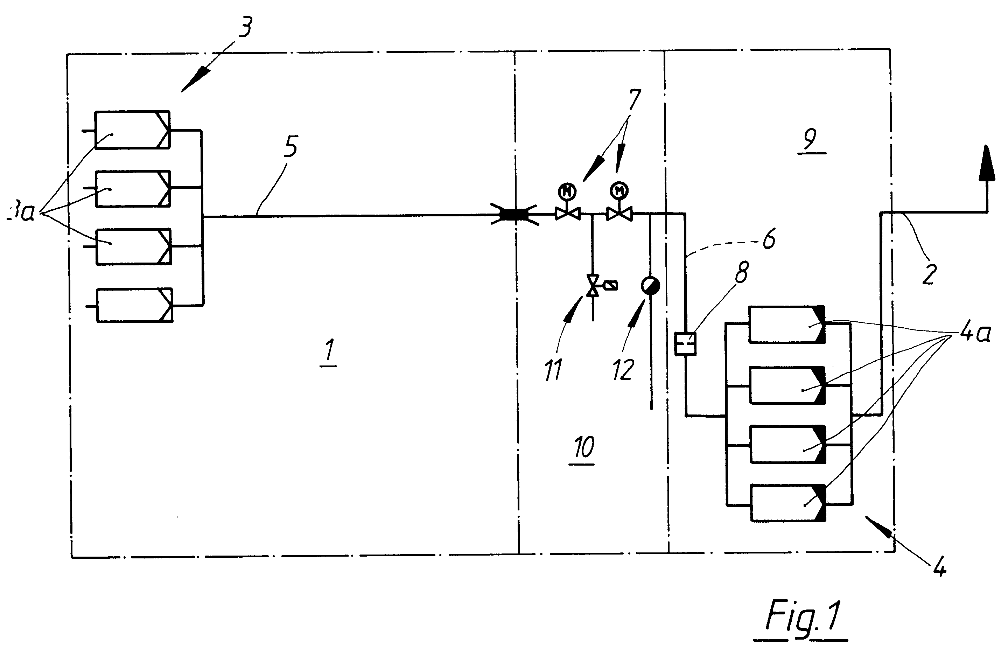

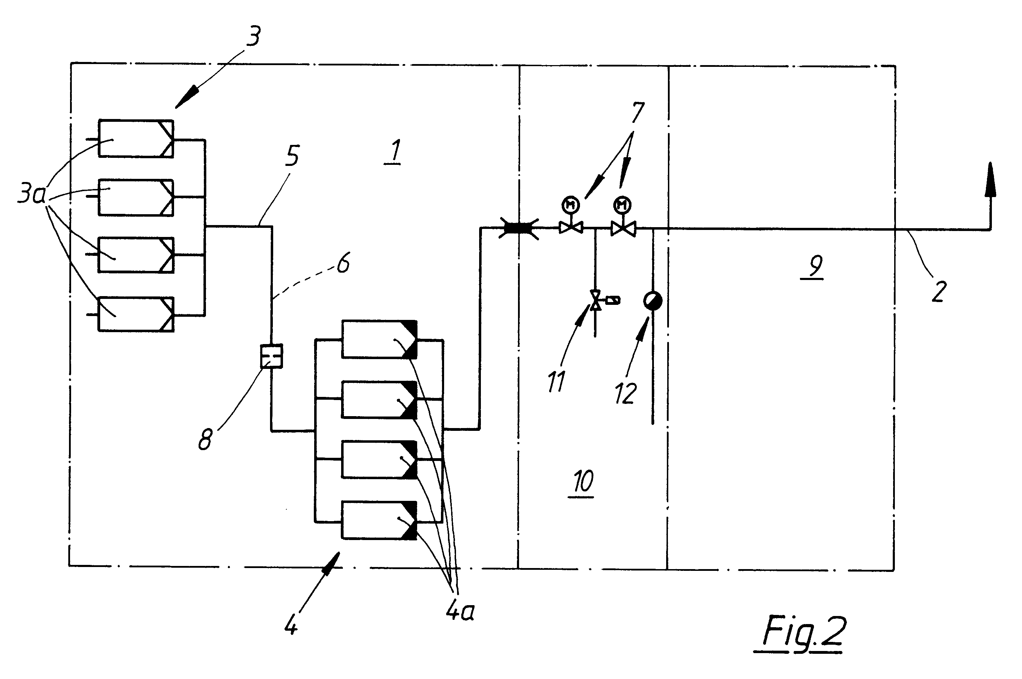

Bei der Ausführungsform nach den Fig. 1 und 2 weist das Filteraggregat 3, 4 ein Aerosolfilter-Teilaggregat 4 für die Jodfilterung auf. Die Teilaggregate 3 bzw. 4 bestehen jeweils aus mehreren Filterelementen 3a bzw. 4a. Bei der Ausführungsform nach Fig. 1 ist das Aerosolfilter-Aggregat 3 innerhalb des Sicherheitsbehälters 1 angeordnet. Das Molekularsieb-Teilaggregat 4 ist über ein Rohrleitungssystem 6 mit Reduzierventil 8 und steuerbaren Armaturen 7 außerhalb des Sicherheitsbehälters 1 an das Rohrleitungssystem 5 für die Abführung des Druckluftstromes angeschlossen. Das Molekularsieb-Teilaggregat 4 befindet sich im Ausführungsbeispiel in einem ohnehin vorhandenen Bauwerk 9 für Hilfsanlagen. Zwischengeschaltet zwischen diesem Bauwerk 9 und dem Sicherheitsbehälter 1 ist ein Ringraum 10, der die üblichen Armaturen 7 und außerdem einen Prüfanschluß 11 aufweist. Hier ist auch eine Entwässerung 12 angeordnet. Bei der Ausführungsform nach Fig. 2 sind sowohl das Aerosolfilter-Teilaggregat 3 als auch das Molekularsieb-Teilaggregat 4 innerhalb des Sicherheitsbehälters 1 angeordnet. Auch hier ist das Molekularsieb-Teilaggregat 4 über ein Rohrleitungssystem 6, über eine Druckreduzierblende (8) und steuerbare Armaturen 7 an das Rohrleitungssystem 5 für die Abführung des Druckluftstromes angeschlossen. Der gefilterte Druckluftstrom wird wie bereits erwähnt, bei 2 an die Atmosphäre abgegeben.

## Patentansprüche

1. Anordnung für die Druckentlastung des Sicherheitsbehälters (1) einer Kernkraftanlage mit Druckwasserreaktor oder Siedewasserreaktor im Störungsfall, wobei der Druckluftstrom aus dem Sicherheitsbehälter (1) gefiltert an die Atmosphäre abgegeben wird,
mit einem Filteraggregat (3, 4) für die Abfilterung von in dem Druckluftstrom mitgeführten radioaktiven Substanzen,
wobei das Filteraggregat (3, 4) ein innerhalb des Sicherheitsbehälters (1) angeordnetes Aerosolfilter-Teilaggregat (3)
sowie ein innerhalb des Sicherheitsbehälters (1) angeordnetes Molekularsieb-Teilaggregat (4) für die Jodfilterung aufweist und
wobei das Molekularsieb-Teilaggregat (4) über ein Rohrleitungssystem (6) mit Druckreduzierblende (8) und Steuerbaren Armaturen (7) an das Rohrleitungssystem (5) für die Abführung des Druckluftstromes angeschlossen ist.

2. Anordnung nach Anspruch 1, wobei das Molekularsieb-Teilaggregat (4) für die Jodfilterung nicht innerhalb des Sicherheitsbehälters (1) angeordnet ist, sondern außerhalb des Sicherheitsbehälters (1),
wobei anstelle einer Druckreduzierblende (8) ein Reduzierventil (8) eingerichtet ist, und
wobei das Molekularsieb-Teilaggregat über ein Rohrleitungssystem (6) mit Reduzierventil (8) und steuerbaren Armaturen (7) außerhalb des Sicherheitsbehälters (1) an das Rohrleitungssystem (5) für die Abführung des Druckluftstromes angeschlossen ist.

3. Anordnung nach Anspruch 2, wobei das Molekularsieb-Teilaggregat (4) in einem ohnehin erforderlichen Bauwerk (9) für Hilfsanlagen angeordnet ist.

## Claims

1. Arrangement for relieving the containment shell (1) of a nuclear power station with pressurized water reactor or boiling water reactor from pressure in abnormal occurrences, whereby the compressed air stream is released from the containment shell (1) in filtered condition to the atmosphere,
with a filter aggregate (3, 4) for filtering out the radioactive substances carried along with the compressed air stream,
whereby the filter aggregate (3, 4) is equipped with an aerosol filter sectional aggregate (3) arranged within the containment shell (1)
as well as with a molecular sieve sectional aggregate (4) for iodine filtering arranged within the containment shell (1), and
whereby the molecular sieve sectional aggregate (4) is connected with the pipework system (5) by means of a pipework system (6) with a pressure reducer stop plug (8) and controllable fittings (7) for releasing the compressed air stream.

2. Arrangement according to claim 1, whereby the molecular sieve sectional aggregate (4) for iodine filtering is not arranged inside the containment shell (1) but outside the containment shell (1),
whereby a reducing valve (8) is installed instead of a pressure reducer stop plug (8), and
whereby the molecular sieve section aggregate is connected with the pipework system (5) outside the containment shell (1) by means of a pipework system (6) with reducing valve (8) and controllable fittings (7).

3. Arrangement according to claim 2, whereby the molecular sieve sectional aggregate (4) is arranged in a building (9) anyway required for auxiliary installations.

## Revendications

1. Dispositif pour la dépressurisation de l'enceinte de confinement (1) d'une centrale nucléaire comportant un réacteur à eau sous pression ou un réacteur à eau bouillante dans le cas d'une perturbation, dans lequel le courant d'air comprimé est évacué dans l'atmosphère en étant filtré, à partir de l'enceinte de confinement, et comportant
une unité à filtres (3,4) servant à séparer par filtrage des substances radioactives entraînées conjointement dans le courant d'air comprimé,
l'unité à filtres (3,4) étant une unité partielle de filtrage d'aérosols (3), disposée à l'intérieur de l'enceinte de confinement (1),
ainsi qu'une unité partielle formant tamis moléculaire (4) qui est disposée à l'intérieur de l'enceinte de confinement (1) et sert à filtrer l'iode, et
dans lequel l'unité partielle formant tamis moléculaire (4) est raccordée par l'intermédiaire d'un système de canalisations tubulaires (6) comportant un diaphragme de réduction de pression (8) et des éléments de robinetterie commandables (7) au système de canalisations tubulaires (5) utilisé pour l'évacuation du courant d'air comprimé.

2. Dispositif selon la revendication 1, dans lequel l'unité partielle formant tamis moléculaire (4) pour le filtrage de l'iode n'est pas disposée à l'intérieur, mais à l'extérieur de l'enceinte de confinement (1), et
dans lequel un détendeur (8) est prévu à la place d'un diaphragme de réduction de pression (8), et
dans lequel l'unité partielle formant tamis moléculaire est raccordée par l'intermédiaire d'un système de canalisations tubulaires (6) comportant un détendeur (8) et des éléments de robinetterie commandables (7), à l'extérieur de l'enceinte de confinement (1), au système de canalisations tubulaires (5) pour l'évacuation du courant d'air comprimé.

3. Dispositif selon la revendication 2 , dans lequel l'unité partielle formant tamis moléculaire (4) est disposée dans un ouvrage de maçonnerie nécessaire (9) pour des installations auxiliaires.
